# EUROPÄISCHE PATENTSCHRIFT

(11) **EP 2 284 085 B1**
(45) Veröffentlichungstag und Bekanntmachung des Hinweises auf die Patenterteilung: **13.03.2013**
(21) Anmeldenummer: 10172360.9
(22) Anmeldetag: 10.08.2010
(51) Int. Cl.: B65D 1/36, B65D 81/32

(54) **Abgepacktes Fertiggericht und Verfahren zu seiner Herstellung**
Packaged ready meal and method for its production
Plat cuisiné emballé et son procédé de fabrication

(30) Priorität: 11.08.2009 DE 102009037107; 11.08.2009 DE 202009010873 U
(43) Veröffentlichungstag der Anmeldung: 16.02.2011
(73) Patentinhaber: Sauerlandfrische Dornseifer GmbH & Co. KG, 57482 Wenden (DE)
(72) Erfinder: Dornseifer, Peter, 57482 Wenden (DE)
(74) Vertreter: Alber, Norbert

(56) Entgegenhaltungen:
- WO-A1-2008/053927
- US-A- 5 655 661

## Beschreibung

### I. Anwendungsgebiet

Die Erfindung betrifft in einem tellerförmigen Behälter abgepackte Fertiggerichte.

### II. Technischer Hintergrund

Bei derartigen Behältern sollen meist die einzelnen Bestandteile des Fertiggerichtes, beispielsweise das Fleisch oder der Fisch einerseits und die ein oder mehreren Beilagen andererseits, separat voneinander präsentiert werden, weshalb in dem tellerförmigen Behälter durch vom Boden aufragende Trennstege eine Unterteilung in einzelne Abteile vorgenommen ist, in denen die einzelnen Bestandteile des Fertiggerichts separat untergebracht werden.

Diese napf- oder tellerförmigen Behälter sind durch eine auf dem umlaufenden Rand aufgesiegelte Siegelfolie dicht verschlossen, was mittels Heißsiegeln oder Ultraschallsiegeln erfolgen kann, sofern die Siegelfolie und/oder der Behälter wenigstens eine siegelfähige Beschichtung aufweisen, beispielsweise einen Schmelzkleber.

In der Regel wird jedoch direkt eine Siegelfolie aus heißsiegelfähigem Material benutzt.

Dabei treten mehrere Probleme für den Hersteller solcher Fertiggerichte auf:

Zum einen benötigt man je nach Fertiggericht unterschiedliche Behälter. Selbst Behälter mit der gleichen Außenkontur und gleicher Randhöhe können je nach Fertiggericht ein, zwei, drei oder auch mehrere Abteile und damit eine entsprechende Anzahl von Trennstegen aufweisen.

Darüber hinaus können die Behälter unterschiedlich groß sein und auch von der Kontur her unterschiedlich geformt sein, je nach Wunsch des Kunden. Außerdem können diese auch unterschiedliche Höhen aufweisen.

Während des Transportes des Fertiggerichtes sollen sich die in den einzelnen Abteilungen untergebrachten Bestandteile nicht selbsttätig vermischen.

Deshalb war es bisher üblich, bei Vorhandensein von Trennstegen die Siegelfolie nicht nur auf dem äußeren Rand, sondern auch auf den Trennstegen aufzusiegeln, wodurch eine dichte Trennung der einzelnen Abteile voneinander möglich war.

Nachteilig war hierbei, dass beim späteren Verzehr des Fertiggerichtes der Verbraucher nur sehr schwer Bestandteile des Fertiggerichts von der einen in die andere Abteilung des Behälters verlagern konnte, beispielsweise um eine der Beilagen mit Soße zu mischen oder ähnliches.

Aus diesem Grund wurde gewünscht, die Trennstege niedriger als den Rand des Behälters auszubilden.

Dies hatte jedoch wieder den Nachteil, dass dann für das Aufsiegeln der Siegelfolie auch auf dem niedrigeren Steg je nach Gestaltung des Behälters unterschiedliche, jeweils angepasste Siegelwerkzeuge notwendig waren, was den Herstellungsaufwand stark in die Höhe trieb.

Aus anderen Gründen war es ebenfalls bereits bekannt, den Innenraum des Behälters, also den Zwischenraum zwischen Behälter und Siegelfolie mittels Unterdruck zu beaufschlagen, vor allem, um die im Fertiggericht enthaltene Sauerstoffmenge zu reduzieren und damit die Haltbarkeit des Fertiggerichtes zu verlängern.

Diese Unterdruckbeaufschlagung wurde meist erst nach dem Aufsiegeln der Folie auf den Behälter durchgeführt, auch um eine eben gespannte Folie zu bewirken, zumindest innerhalb der einzelnen Abteile, wenn zwischen den Abteilen die Trennstege genauso hoch wie der Rand waren.

Dies hat jedoch den Nachteil, dass beim späteren Erwärmen des Fertiggerichtes in einer Mikrowelle die Siegelfolie sich nur wenig nach oben ausdehnen kann, wenn das im Fertiggericht enthaltene Wasser durch die Erwärmung teilweise verdampft und ein massiv zunehmendes Volumen im Inneren des Behälters beansprucht.

Dadurch kommt es beim Erwärmen des Fertiggerichtes dann sehr schnell zu einem Platzen der Siegelfolie oder Abreißen der Siegelnaht zwischen Siegelfolie und Behälter und damit zum einen zu einem Feuchtigkeitsverlust und zum anderen zu Verschmutzungen in der Mirkowelle.

Die vorbeschriebenen, mittels einer Siegelfolie auf der Oberseite dicht verschossenen Behälter sind prinzipiell beispielsweise aus der DE 39 19 120 A1 oder der WO 2008/053927 bekannt.

Weiterhin ist es aus der DE 10 2007 021 137 bekannt, in den einzelnen Abteilen eines solchen Behälters die Siegelfolie entweder über das Abteil hinweg gespannt anzuordnen oder auf dem Produkt direkt anliegen zu lassen.

Dabei ergibt sich aus [27] dieser Schrift indirekt, dass die Folie auf den Trennstegen des Behälters aufgesiegelt ist, da sonst keine unterschiedlichen Druckverhältnisse in den einzelnen Abteilen vorliegen könnten.

### III. Darstellung der Erfindung

### a) Technische Aufgabe

Es ist daher die Aufgabe gemäß der Erfindung, ein abgepacktes Fertiggericht sowie ein Verfahren zu dessen Herstellung zur Verfügung zu stellen, und trotz geringem Kostenaufwand die beschriebenen Nachteile vermeiden.

### b) Lösung der Aufgabe

Diese Aufgabe wird durch die Merkmale der Ansprüche 1 und 9 gelöst. Vorteilhafte Ausführungsformen ergeben sich aus den Unteransprüchen.

Indem bei einem tellerförmigen Behälter, in dem sich das Fertiggericht befindet, einerseits die Trennstege niedriger sind als der äußere Rand des Behälters und andererseits die Siegelfolie, die auf dem umlaufenden Rand dicht aufgesiegelt ist und den Behälter dicht verschließt, auf der Oberseite der Trennstege anliegt, wird auch ohne eine Verklebung der Siegelfolie auf den Trennstegen eine ausreichend dichte Trennung der Abteile des Behälters voneinander erreicht, ohne dass für jede Unterteilungsvariante des Behälters oder eine andere Größe des Behälters ein anderes Siegelwerkzeug benötigt wird.

Um die Siegelfolie an den Trennstegen und gegebenenfalls auch an der Oberseite der in den Abteilen des Behälters liegenden Produkte anzulegen, können unterschiedliche Verfahren angewendet werden:
Entweder wird der Innenraum zwischen Behälter und Siegelfolie mit Unterdruck beaufschlagt, also das dort enthaltene Gas weitestgehend abgesaugt und /oder durch geringe Mengen eines Inertgases ersetzt.

Dann muss hierfür eine Saugkanüle in diesen Innenraum vorgeschoben werden, um das dort vorhandene Gas abzusaugen.
Dies geschieht vorzugsweise vor dem Aufsiegeln der Folie auf den Rand, um ein Nachrutschen der Folie zur Behältermitte hin zu ermöglichen, was aufgrund der benötigten zusätzlichen Längen an Folie, wenn diese nach unten gezogen wird, notwendig ist, da die Folie hierfür in der Regel nicht ausreichend dehnfähig ist.

Eine solche Saugkanüle kann entweder durch die Siegelfolie oder durch den Behälter eingestochen oder durch die noch anfänglich vorhandene Fuge zwischen Siegelfolie und Behälter eingeführt werden.

In den ersten beiden Fällen entsteht dabei eine Einstichöffnung, die anschließend dicht verschlossen werden muss, um den Unterdruck dauerhaft aufrechtzuerhalten. Dies kann durch Verschweißen, beispielsweise im selben Arbeitsgang wie das Aufsiegeln der Folie, erfolgen, oder durch Verschließen mittels eines aufgeklebten Etiketts.

Eine andere Möglichkeit besteht darin, das Gas aus dem Inneren des Behälters abzusaugen, in dem kurz vor dem Aufsiegeln der Siegelfolie, wenn also noch ein geringer Abstand zwischen Siegelfolie und Behälterrand vorhanden ist, über diesen noch offenen Abstand Gas aus dem Inneren des Behälters abzusaugen, was dann möglich ist, wenn das bereits sehr nahe an die Siegelfolie angenäherte Siegelwerkzeug insgesamt in einem unterdruckbeaufschlagten Raum untergebracht ist.

Diese Unterdruckbeaufschlagung kann selbstverständlich auch vorher, also abseits der Siegelstation, durchgeführt werden, jedoch besteht dann das Problem darin, von der Unterdruckstation zur Siegelstation den Behälter zu verbringen, ohne dass der Unterdruck im Innenraum wieder verloren geht.

Deshalb wird vorzugsweise die Unterdruckbeaufschlagung an der Stelle des Versiegelns des Behälters, aber zeitnah unmittelbar vor dem Versiegeln durchgeführt.

Eine andere Möglichkeit des Heranziehens der Folie an die Trennstege besteht darin, die Siegelfolie von ihrer Oberseite her mit Überdruck zu Beaufschlagen und damit nach unten gegen die Trennstege und gegebenenfalls die in den Abteilen des Behälters liegenden Produkte zu drücken.

Dann ist in der Unterseite des Siegelwerkzeuges ein Überdruckanschluss, also ein Druckluftanschluss, vorhanden, der vor dem Aufsiegeln der Folie, wenn aber das Siegelwerkzeug bereits stark an den oberen Rand des Behälters und damit an die Siegelfolie angenähert ist, beaufschlagt wird und die Siegelfolie nach unten drückt.

Vorzugsweise ist im Bereich jedes einzelnen Abteiles des Behälters ein eigener Druckluftanschluss vorhanden, und da die Behälter individuell in verschiedene Abteile unterteilt sein können, sind Druckluftanschlüsse vorzugsweise gleichmäßig rasterartig über die Fläche des Siegelwerkzeuges verteilt vorhanden, die jedoch vorzugsweise getrennt ansteuerbar sind.

Damit die Siegelfolie an der gesamten Oberkante der Trennstege möglichst eng anliegt, weisen die Trennstege an ihrem Übergang in die Wand eine stark verbreiterte Oberseite auf, oder sie steigen an diesem Übergang schräg auf das Niveau des umgebenden Randes an.

Die Haltekraft der Siegelnaht ist dabei so dimensioniert, dass bei einem Überdruck im Behälter - beispielsweise beim Erhitzen des Fertiggerichtes in der Mirkowelle - die Versiegelung zwischen Siegelfolie und Behälter sich löst, bevor die Siegelfolie reißt.

Um Überhaupt eine Heißversiegelung zu ermöglichen, muss natürlich entweder die Siegelfolie oder der Behälter oder beide im zu versiegelnden Bereich eine heißsiegelfähige Beschichtung aufweisen.

Vorzugsweise besteht jedoch die Siegelfolie insgesamt aus einem Heißsiegel, insbesondere Kunststoff.

Auf der Oberseite der Stege kann zusätzlich zu deren ebener Ausbildung eine vertiefte Mittelrinne ausgebildet sein, um beim Anliegen der Folie darin einen zusätzlichen Dichtungseffekt zu bewirken.

Ein anderer kritischer Punkt ist der Kreuzungspunkt von Trennstegen:
Damit sich auch hier die Siegelfolie gut und dicht anlegen kann, weisen auch diese Kreuzungspunkte eine stark verbreiterte Oberseite auf.

Falls der Unterdruck durch Absaugen von Gas aus dem Inneren des Behälters erzeugt wurde, muss hierfür eine Absaugöffnung entweder in der Folie oder im Behälter oder in der Fuge dazwischen vorhanden gewesen sein, die anschließend zur Aufrechterhaltung des Unterdruckes wieder verschlossen werden muss.

Sofern diese Absaugöffnung sich im Behälter oder in der Folie befindet, ist gerade der Kreuzungspunkt von Trennstegen, insbesondere bei sternförmig verlaufenden Trennstegen, bei denen sich somit alle Trennstege an einem einzigen gemeinsamen Kreuzungspunkt treffen, der ideale Absaugpunkt, so dass eine Absaugöffnung in der Siegelfolie und/oder dem Behälter an dieser Stelle positioniert sein kann.

Für ein dichtes Anliegen der Siegelfolie an den Trennstegen ist es günstig, wenn alle Trennstege gleich hoch ausgebildet sind.

Dennoch kann es bei bestimmten Fertiggerichten sinnvoll sein, die Trennstege unterschiedlich hoch zu gestalten. Dann ist zwischen den einzelnen unterschiedlich hohen Trennstegen vorzugsweise wieder entweder am Kreuzungspunkt eine starke Verbreiterung der Oberseite der Trennstege vorhanden, oder der niedrigere Trennsteg steigt in der Nähe des höheren Trennsteges schräg auf dessen Niveau an.

Für das insbesondere automatische Füllen und Versiegeln des Behälters wird dieser vorzugsweise mittels einer Fördereinrichtung bewegt und muss dann auf der Fördereinrichtung definiert positioniert werden.

Zu diesem Zweck sind formschlüssige Positionierelemente am Behälter ausgebildet, die vorzugsweise am Rand des Behälters, und zwar an der Innenkante des Randes des Behälters, ausgebildet sind, beispielsweise in Form von Positioniervertiefungen, von denen je eine in jedem Eckbereich vorhanden ist.

Bevorzugt weisen dabei die beiden Positionierelemente an der einen Stirnfläche des Behälters Anschlagsflächen in Längsrichtung und die an der anderen Stirnfläche des Behälters Anschlagsflächen in Querrichtung auf, wodurch der Behälter in beiden Richtungen exakt positioniert werden kann.

Damit auch ohne Verklebung die Siegelfolie möglichst dicht auf der Oberseite der Trennstege verbleibt, ist es auch wichtig, dass die Trennstege selbst stabil ausgebildet sind und sich vor allem ihre Oberseite nicht nach unten durchbiegen kann.

Um den Materialverbrauch nicht unnötig zu erhöhen, sind die Trennstege als an der Unterseite hohle Querschnitte ausgebildet, entsprechend einem auf dem Kopf stehenden V, so dass der Behälter über den gesamten Bereich eine im Wesentlichen gleiche Wandstärke besitzt.

Damit dies auch im Randbereich möglich wird und dennoch der Rand ausreichend steif ist, ist der Rand an seiner Außenkante doppelt, etwa Z-förmig gekröpft.

Falls das Herabziehen der Siegelfolie mittels Unterdruck-Anwendung im Innenraum des Behälters erfolgt, weist vorzugsweise das Siegelwerkzeug selbst einen Unterdruckanschluss mit einer Saugkanüle auf, die durch die Folie ins Innere des Behälters einsticht und das dort vorhandene Gas weitestgehend absaugt.

Die Saugkanüle kann entweder vorzugsweise im Bereich des Kreuzungspunktes von Trennstegen angeordnet sein, oder auch im Bereich der formschlüssigen Positionierelemente, sodass in beiden Fällen die Einstichöffnung in der Folie dann optimal weit von den im Behälter enthaltenen Produkten entfernt ist, wodurch eine Verschmutzung der einstechenden Saugkanüle vermieden werden kann.

Sofern dagegen in den einzelnen Abteilen separat eingestochen und das dort enthaltene Gas abgesaugt wird, kann in den einzelnen Abteilen auch ein unterschiedlich hoher Unterdruck vorliegen mit der Folge, dass in einem Abteil die Siegelfolie nur bis auf die Oberseite der Trennstege herabgezogen ist und von dort aus eben bis zum Randbereich verläuft, während in einem anderen Abteil daneben die Siegelfolie dicht auf der Oberseite des in diesem Abteil liegenden Produktes anliegt und gegebenenfalls auch in dem vom Produkt nicht abgedeckten, umgebenden Bodenbereich dieses Abteils.

Nach dem Aufsiegeln der Siegelfolie wird die Siegelfolie entsprechend der Umfangskontur des Behälters abgeschnitten, jedoch unter Belassen einer über diese Kontur nach außen vorstehenden Zuglasche an der Siegelfolie, mit der die Siegelfolie später vom Benutzer ergriffen und die Siegelfolie abgezogen werden kann.

Falls die Siegelfolie mittels Druckluft von oben her ins Innere des Behälters hineingedrückt wird, wird dabei vorzugsweise aufgeheizte Druckluft verwendet, um die Siegelfolie weich und biegsam zu machen, so dass sie sich besonders gut an die Oberseite der Trennstege und der Produkte anlegt, und nach dem Abkühlen in dieser Form und Position verbleibt.

Beim Siegeln mit einem Heizstempel wird zu diesem Zweck das Beaufschlagen mit Druckluft, gegebenenfalls beheizter Druckluft, erst durchgeführt, nachdem der Heizstempel eine definierte Zeit lang oberhalb der Siegelfolie im geringen Abstand angeordnet war und daher durch seine Strahlungswärme die Siegelfolie ebenfalls bereits erwärmt und erweicht hat.

### c) Ausführungsbeispiele

Ausführungsformen gemäß der Erfindung sind im Folgenden beispielhaft näher beschrieben. Es zeigen:

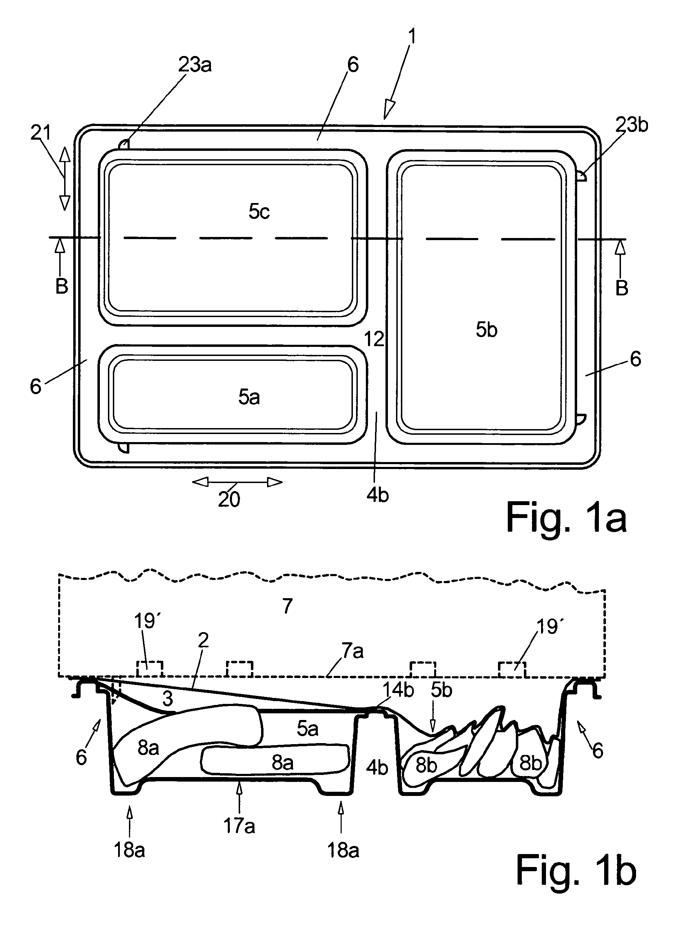

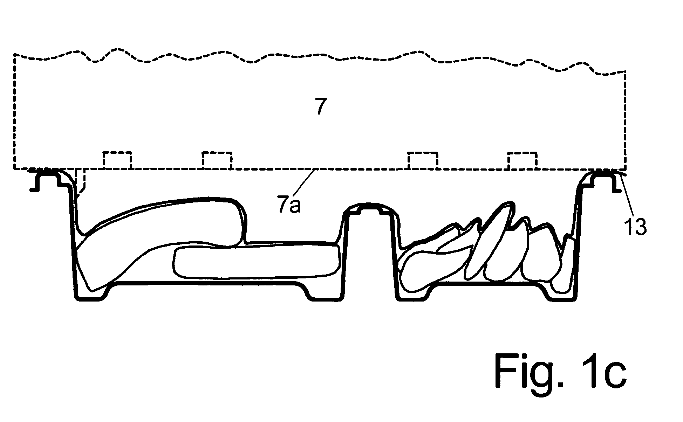

- Fig. 1 a:: Den leeren Behälter in der Aufsicht,
- Fig. 1 b, c:: den gefüllten und verschlossenen Behälter,
- Fig. 2:: den Herstellungsablauf, und
- Fig. 3:: einen Querschnitt durch die Siegelstation.

Dabei zeigt Figur 1a den leeren Behälter 1 und in Figuren 1b und 1c im Querschnitt denselben Behälter im gefüllten und verschlossenen Zustand.

Wie zu erkennen, ist der Behälter 1 prinzipiell topf- oder napfförmig gestaltet, in dem entlang des Außenumfanges des Bodenbereiches Wände aufragen, die über den gesamten Umfang umlaufen, und in einem oberen Rand 6, der eine ebene Oberseite aufweist, und außerhalb der ebenen Oberseite eine Z-förmige Köpfung nach unten aufweist, enden.

Der Innenraum 3 dieses Behälters 1, in dem Produkte 8a, b aufgenommen werden sollen, ist im gefüllten Zustand durch eine Siegelfolie 2 dicht verschlossen, die umlaufend auf der Oberseite des Randes 6 aufgesiegelt ist.

Der Innenraum 3 des Behälters 1 ist weiterhin durch vom Boden aufragende Trennstege 4a, b in einzelne Abteile 5a, b unterteilt, in denen sich die einzelnen Komponenten eines Fertiggerichts als Produkte 8a, b befinden.

Die Trennstege 4a, b ragen weniger weit nach oben als der Rand 6 und sind zum Zwecke der Stabilisierung des Behälters 1 als im Querschnitt von unten her hohle, auf dem Kopf stehende V-Formen ausgebildet, besitzen jedoch ebenfalls eine ebene Oberseite.

Die Siegelfolie 2 liegt ohne Verklebung an der Oberseite dieser Trennstege 4a, b an, die sich gemäß Figur 1a in einem Kreuzungspunkt 12 kreuzen.

Da die mögliche dichte Abtrennung der Innenräume 3 der einzelnen Abteile 5a, b davon abhängt, wie gut und dicht die Siegelfolie 2 auf der Oberseite 14a, b der Trennstege 4a, b anliegt, muss hierfür vor allem in den kritischen Übergangsbereichen zwischen den niedrigeren Trennstegen 4a, b und dem höheren Rand 6 Sorge getragen werden.

Zu diesem Zweck steigt die Oberseite 14a, b der Trennstege 4a, b entweder zum Rand 6 hin an - wie in Figur 1b, linke Hälfte zu erkennen - oder/und in diesem Bereich erweitert sich die Breite der Oberseite des in der Aufsicht betrachteten Trennsteges 4a, b zum Rand 6 hin zunehmend, wie in Figur 1a zu erkennen.

Aus dem gleichen Grund kann in der Oberseite 14a, b der Trennstege 4a, b auch eine vertiefte Mittelrinne 22 angeordnet sein, wodurch durch das Anliegen der Siegelfolie 2 in dieser Mittelrinne 22 ein zusätzlicher Dichtungseffekt auftritt.

Die Siegelfolie 2 endet knapp außerhalb des Randes 6 des Behälters 1, und steht vorzugsweise nur an einer Stelle in Form einer Zuglasche 13 weiter darüber vor, wie in einer Ecke der Figur 1c dargestellt, wobei die Zuglasche 13 vorzugsweise in dem Bereich des Behälters 1 angeordnet wird, in dem sich das Produkt mit dem geringsten Wassergehalt befindet, um nach dem Erhitzen beim Öffnen durch Ziehen der Zuglasche 13 das Risiko des Herausspritzens von Flüssigkeit so gering wie möglich zu halten.

Das Aufsiegeln der Siegelfolie 2 nur auf dem Rand 6 des Behälters ermöglicht es - wie in den Figuren 1b und 1c angedeutet - hierfür ein immer gleiches Siegelwerkzeug 7 zu verwenden, welches lediglich eine ebene Unterseite 7a besitzen muss, die also nicht an die spezifische Kontur, Höhe, Unterteilung oder gar Füllung des Behälters 1 angepasst sein muss, sondern lediglich eine ausreichend große Fläche der Unterseite 7a besitzen muss.

Die Siegelfolie 2 liegt im gefüllten und verschlossenen Zustand des Behälters 1 zumindest an den Oberseiten der Trennstege 4a, b durchgängig und an allen Trennstegen 4a, b auf, vorzugsweise dazwischen, also innerhalb der Abteile 5a, b, auch auf der Oberseite der darin befindlichen Produkte 8a, b..., wie in Figur 1c dargestellt.

Alternativ kann die Siegelfolie 2 in einem oder auch mehreren der Abteile 5a, b - wie in Figur 1b linker Seite dargestellt - nicht bis auf die Produkte 8a, b heranreichen. Beide Varianten sind innerhalb ein und desselben Behälters 1 ebenfalls möglich.

Damit die Siegelfolie 2 in Anlage zumindest an den Trennstegen 4a, b auf Dauer verbleibt, muss vorzugsweise im Innenraum 3 unter der Siegelfolie 2 ein Unterdruck aufrechterhalten bleiben, oder - falls dort Umgebungsdruck herrscht - muss die Siegelfolie entweder in der Anlagestellung so formstabil sein, dass aufgrund ihrer Eigenstabilität eine Rückverformung mit Abheben von den Trennstegen nicht zu erwarten ist oder die Siegelfolie 2 an den Produkten 8a, b so eng anliegt, dass ein Abheben zumindest der Trennstege 4a, b das Volumen in den Abteilen 5a, b unterhalb der Siegelfolie 2 so stark vergrößern würde, dass dann dort ein Unterdruck auftreten würde, was das Abheben von den Trennstegen 4a, b verhindert.

Das anfängliche Anlegen der Siegelfolie 2 an die Trennstege 4a, b und gegebenenfalls die Produkte 8a, b kann prinzipiell - sofern kein individuell geformter Anpressstempel benutzt wird, was gemäß der Erfindung gerade vermieden werden soll - auf zweierlei Arten erfolgen:
Entweder indem im Bereich unterhalb der Siegelfolie 2 ein Unterdruck unmittelbar vor dem Versiegeln erzeugt und beim Versiegeln aufrechterhalten wird, oder indem stattdessen die Oberseite der Siegelfolie 2 mit Überdruck beaufschlagt und dadurch gegen die Trennstege 4a, b und gegebenenfalls auch die Produkte 8a, b gepresst wird.

Letzteres ist auf einfache Art und Weise möglich, indem - wie in Figur 1b gestrichelt dargestellt - in der ebenen Unterseite 7a des Siegelwerkzeuges 7 Überdruckauslässe 19', vorzugsweise für Druckluft, insbesondere beheizte Druckluft, vorhanden sind, die vorzugsweise rasterartig über die gesamte Fläche des Siegelwerkzeuges 7 verteilt angeordnet und einzeln angesteuert werden können.

Auf diese Art und Weise kann das Siegelwerkzeug 7 zunächst auf einen sehr geringen Abstand oder gar mit geringer Anlagekraft kontaktierend im Bereich des Randes 6 auf die Siegelfolie 2 aufgelegt werden, die sich zu diesem Zeitpunkt in der Regel noch eben horizontal von einem Rand 6 zum gegenüberliegenden Rand 6 befindet.

Durch die enge und flächige Anlage des Siegelwerkzeuges 7 wird - wenn es sich dabei um ein Heißsiegelwerkzeug handelt - die Siegelfolie 2 erwärmt und wird dadurch leichter verformbar, was durch Wählen der Verweilzeit in diesem Zustand gesteuert werden kann.

Anschließend wird über die Unterdruckauslässe 19' Druckluft auf die Oberseite der Siegelfolie 2 gegeben, wodurch diese nach unten gepresst wird auf die Oberseite der Trennstege 4a, b und - je nach Relation des aufgewandten Überdruckes zur Haltekraft der Siegelfolie 2 im Bereich der Ränder 6 - auch auf die in den Abteilen 5a, b liegenden Produkte 8a, b.

Durch Steuern des Druckes und der eingeschossenen Druckluftmenge der einzelnen Druckluftauslässe 19' kann dabei auch ein unterschiedlich starkes nach unten Drücken in den einzelnen Abteilen 5a, b erreicht werden, wie in Figur 1b dargestellt.

Durch das nach unten Drücken der Folie muss die Siegelfolie 2 über den Rand 6 zur Mitte des Behälters hin nachrutschen können. Erst danach wird - durch Anlage bzw. Verstärken des Druckes des Siegelwerkzeuges 7 auf den Rand 6 des Behälters 1 - die Siegelfolie 2 dicht auf den Rand 6 aufgesiegelt.

Dementsprechend muss vorher die Verweilzeit bzw. der Abstand des Siegelwerkzeuges 7 zur Siegelfolie 2 so gewählt werden, dass in diesem Aufheizzustand für die Siegelfolie 2 noch keine Verklebung gegenüber dem Rand 6 des Behälters 1 erfolgt.

Auch in einer eventuell vorhandenen vertieften Mittelrinne 22 in der Oberseite der Trennstege 4a, b wird sich die Siegelfolie 2 eng anlegen.

Eine andere Möglichkeit besteht darin, unterhalb der Siegelfolie 2 Unterdruck zu erzeugen.

Eine Möglichkeit hierfür besteht darin, nach enger Annäherung oder gar Aufliegen mit geringer Kraft des Siegelwerkzeuges 7 auf der Siegelfolie 2 im Bereich des Randes 6 mittels einer Saugkanüle 9 z. B. von oben her durch die Siegelfolie 2 einzustechen und über die Saugkanüle 9 Luft aus dem Innenraum 3 unterhalb der Siegelfolie 2 abzusaugen, gegebenenfalls mittels mehrerer Saugkanülen 9 in den einzelnen Abteilen 5a, b, beispielsweise jeweils in den Eckbereichen des Behälters 1, vorzugsweise auch in den Bereichen der als Positionierelemente dienenden Positioniervertiefungen 23a, b, c, d, die an der Innenseite des Randes 6 ausgebildet sind.

Von diesen vier Positioniervertiefungen 23a, b weisen zwei eine ebene Anschlagsfläche in Längsrichtung 20 und zwei eine ebene Anschlagsfläche in Querrichtung 21 auf, wodurch eine exakte Positionierung des Behälters 1 mit Hilfe entsprechender Positioniervorsprünge in einer Fördereinrichtung, einer Siegelstation oder ähnlichem automatisch möglich ist.

Das Einstechen der Kanüle 9 in diesen Bereichen ist deshalb vorteilhaft, weil sich zum einen die Einstichstelle damit weit entfernt von den Produkten 8a, b befindet und ein Verschmutzen der Spitze der Saugkanüle 9 durch Eintauchen in Produkte 8a, b äußerst unwahrscheinlich ist.

Zum anderen kann in diesem Bereich ein anschließendes dichtes Verschließen der durch die Saugkanüle 9 erzeugten Einstichöffnung ebenfalls gut erfolgen, beispielsweise durch Aufkleben eines Etiketts, wenn sich die Einstichöffnung innerhalb des Randes 6 befindet.

Befindet sich die Einstichöffnung dagegen im Bereich der Positioniervertiefung 23, so kann das Siegelwerkzeug 7 auch so gestaltet sein, dass es einen absenkbaren Teil aufweist, der nach dem Zurückziehen der Saugkanüle 9 den Rand der Positioniervertiefung 23 umlaufend dicht am Rand 6 versiegelt.

Da sich die Positioniervertiefung 23 unabhängig von der Gestaltung und Vorhandensein der Trennstege 4a, b bei jedem Behälter 1 an der gleichen Stelle befinden, sind hierfür nicht viele verschiedene Siegelwerkzeuge 7 notwendig.

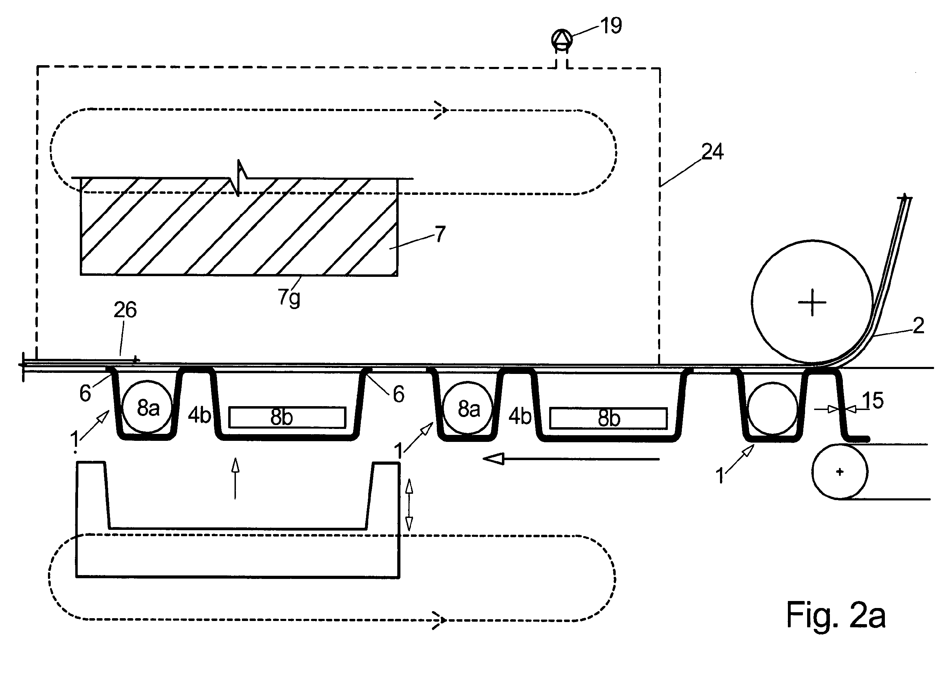

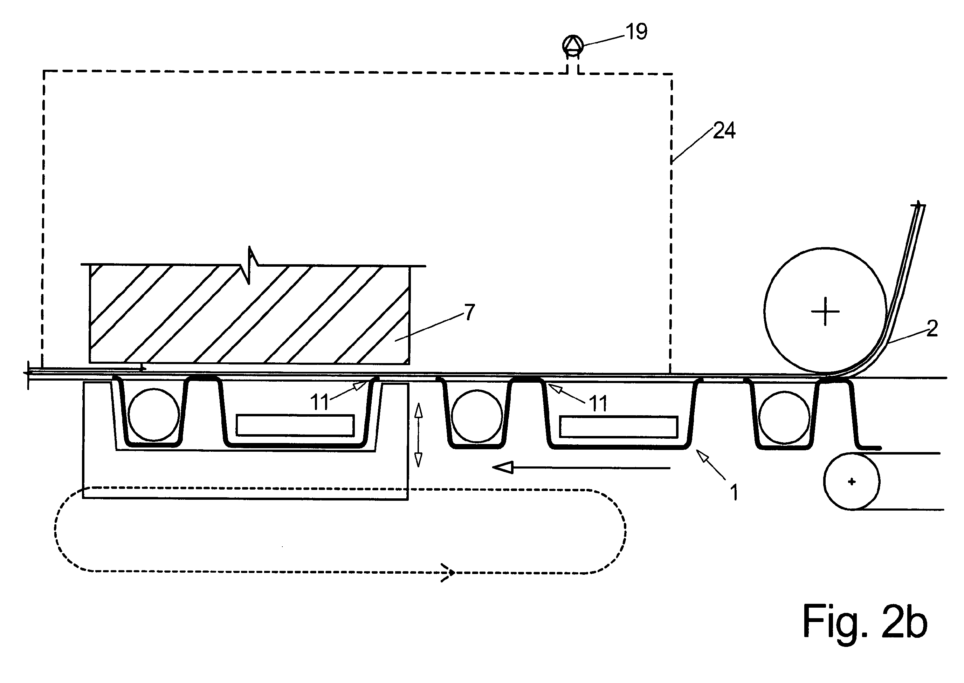

Eine einfache Möglichkeit Gas aus dem Bereich unterhalb der lose aufliegenden Siegelfolie 2 abzusaugen besteht jedoch darin, durch die noch vorhandene Fuge 11 zwischen Siegelfolie 2 und dem Rand 6 des Behälters 1 abzusaugen, wofür jedoch der gesamte Bereich außerhalb des Randes 6 des Behälters 1 ebenfalls unter einem Unterdruck stehen muss, wie nachfolgend anhand der Figuren 2 erläutert.

Sofern dies gegeben ist, kann wiederum das Siegelwerkzeug 7 zunächst soweit von oben an die Siegelfolie 2 angenähert werden, das zwischen Siegelfolie 2 und Rand 6 des Behälters 1 nur noch eine zunehmend geringer werdende Fuge 11 besteht, über die Gas unter gleichzeitigem Nachrutschen der Siegelfolie 2 in Richtung Mitte des Behälters 1 abgesaugt wird, bis dieser Vorgang abgeschlossen ist und die Siegelfolie 2 auf dem Rand 6 aufgepresst und verschweißt wird.

Die Figuren 2 zeigen - in Figur 2a mit abgehobenem und mit Figur 2b mit angenäherten Siegelwerkzeugs 7 - einen möglichen Verfahrensablauf:
Die Behälter 1 werden dabei von rechts nach links transportiert und sind hierbei in einer nicht näher präzisierten Transportvorrichtung von unten formschlüssig aufgenommen, während von oben die noch durchgehend bandförmige Siegelfolie 2 von der Rolle zugeführt wird.

Das Siegelwerkzeug 7 kann nicht nur auf den Rand 6 des Behälters 1 abgesenkt werden, sondern sich auch über eine begrenzte Strecke mit den in Transportrichtung weiter bewegten Behältern 1 mitbewegen und damit gegenüber diesen ohne Relativbewegung bleiben.

Der Bewegungsweg des Siegelwerkzeuges 7 ist so bemessen, dass die Laufzeit für das Versiegeln der Siegelfolie 2 auf den Behälter 1 ausreicht und auch gegebenenfalls zum vorherigen Erzeugen eines ausreichenden Unterdruckes im Innenraum des Behälters 1 unterhalb der Siegelfolie 2.

Zu diesem Zweck ist das Siegelwerkzeug 7 in einer Unterdruckhaube 24 aufgenommen, die sich entweder mit dem Siegelwerkzeug 7 mitbewegt oder - wie im dargestellten Fall - nicht mitfährt, sondern so groß bemessen ist, dass sich der gesamte Bewegungsweg des Siegelwerkzeuges 7 darin befindet.

Da in der Regel die Siegelfolie 2 als Band nicht wesentlich breiter ist als die Behälter 1, ragt die Unterdruckhaube 24 seitlich über Behälter 1 und Siegelfolie 2 hinaus und vorzugsweise neben den Rändern 6 des Behälters 1 auch noch nach unten, so dass an allen vier umlaufenden Kanten des rechteckigen Behälters 1, aber auch bei anders geformten Behältern 1, Luft aus der Fuge 11 zwischen der noch nicht fest aufgepressten Siegelfolie 2 und dem Rand 6 des Behälters 1 abgesaugt werden kann, bis der gewünschte Unterdruck im Inneren des Behälters 1 vorliegt.

Dann wird das Siegelwerkzeug 7 auf den Rand 6 aufgepresst und die dazwischen liegende Siegelfolie 2 mit dem Rand 6 verschweißt.

Sobald dies beendet ist, hebt das Siegelwerkzeug 7 nach oben ab, bewegt sich entgegen der Transportrichtung des Behälters 1 an den Beginn seines Bewegungsweges und der Zyklus beginnt erneut.

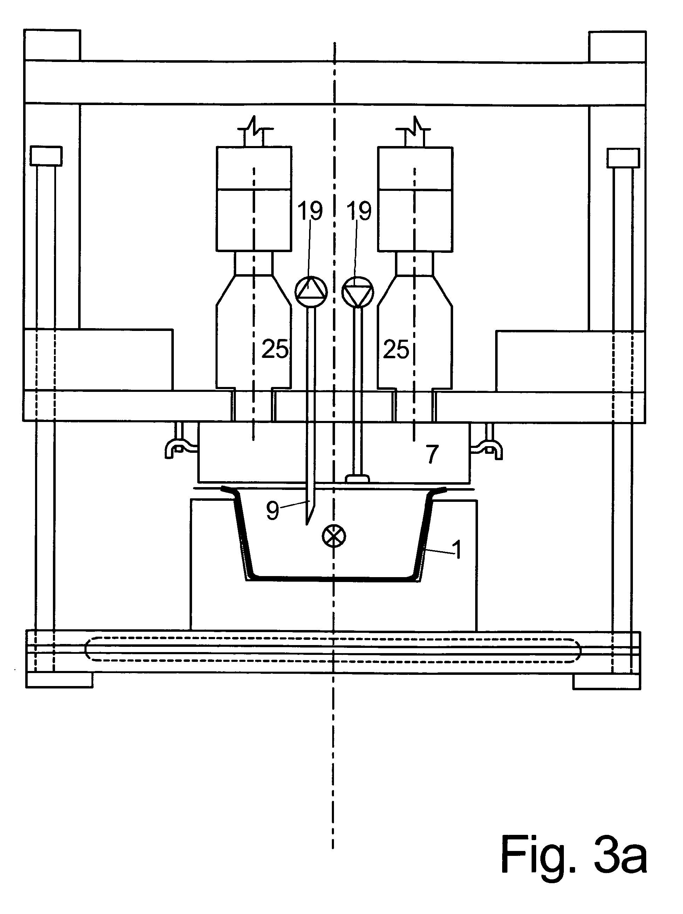

Figur 3 zeigt anstelle eines Heizstempels wie er beispielsweise in Figur 2 verwendet werden kann, einen Schnitt durch eine Siegelstation, bei der mittels einer Ultraschallsonotrode 7 gesiegelt wird, die von Aktuatoren 25 in Ultraschallschwingungen versetzt wird.

Auch hier kann die gesamte Siegelstation, die in einem Rahmen, dessen Oberteil gegenüber dem Unterteil abgehoben werden kann, gegebenenfalls in Transportrichtung mit dem Behälter 1 mitverfahren werden.

In Figur 3 sind -je nach Methode zum Absenken der Siegelfolie 2 ins Innere des Behälters 1 hinein auf die Trennstege 4a, b - alternativ entweder eine Saugkanüle 9 mit Unterdruckanschluss 19 schematisch eingezeichnet, die durch die Siegelfolie 2 ins Innere des Behälters einstechen würde, oder eine Überdruckaustrittsöffnung, die mit einem Überdruckanschluss 19 verbunden ist.

### BEZUGSZEICHENLISTE

- 1: Behälter
- 2: Siegelfolie
- 2a: Unterseite
- 3: Innenraum
- 4a, b: Trennstege
- 5a, b: Abteile
- 6: Rand
- 7: Siegelwerkzeug, Ultraschallsonotrode
- 7a: Unterseite
- 8a: Produkte
- 9: Saugkanüle
- 10: Einstechöffnung
- 11: Fuge
- 12: Kreuzungspunkt
- 13: Zuglasche
- 14a,b: Oberseite der Trennstege
- 15: Wandstärke
- 16: Außenkante
- 17a: Mittelteil
- 18a: Randbereich
- 19: Unterdruckanschluss
- 19': Überdruckauslässe
- 20: Längsrichtung
- 21: Querrichtung
- 22: Mittelrinne
- 23a: Positioniervertiefung
- 24: Unterdruckhaube
- 25: Aktuator
- 26: Schutzfolie

## Patentansprüche

1. Verfahren zum Herstellen von abgepackten Fertiggerichten in einem tellerförmigen Behälter (1), der verschlossen ist durch eine auf einem äußeren Rand (6) des Behälters (1) aufgesiegelte Siegelfolie (2),
**dadurch gekennzeichnet, dass**
a) ein Innenraum (3) des Behälters (1) durch vom Boden aufragende Trennstege (4a, b) in einzelne Abteile (5a, b) unterteilt ist, und die Trennstege (4a, b) niedriger sind als der äußere Rand (6) des Behälters (1),
b) nach dem Auflegen der Siegelfolie (2) auf dem Behälter (1) die Siegel-folie (2) dicht an die Trennstege (4a, b), insbesondere auch an die Oberseite der Produkte (8a, b) angelegt wird,
c) erst danach die Siegelfolie (2) ausschließlich auf dem Rand (6) des Behälters (1) aufgesiegelt wird,
d) das Aufsiegeln der Siegelfolie (2) mit immer einem gleichen Siegelwerkzeug (7) mit ebener Unterseite (7a) nur auf dem äußeren Rand (6) erfolgt unabhängig von dem Vorhandensein, der Anzahl und Lage der Trennstege (4a, b) sowie der äußeren Kontur und Größe des Behälters (1).

2. Verfahren nach Anspruch 1,
**dadurch gekennzeichnet, dass**
- das Anlegen der Siegelfolie (2) gegebenenfalls an die Oberseite (14a, b) der Trennstege (4a, b) und Oberseite der Produkte (8a, b) durch Beaufschlagen der Unterseite (2a) der Siegelfolie (2) mit Unterdruck erfolgt oder
- das Anlegen der Siegelfolie (2) an die Oberseite der Produkte (8a) und die Trennstege (4a, b) durch Beaufschlagen der Oberseite der Siegel-folie (2), insbesondere eines Raumes zwischen Oberseite der Siegelfolie (2) und der ebenen Unterseite (7a) des Siegelwerkzeuges (7), mit Überdruck erfolgt.

3. Verfahren nach einem der vorhergehenden Ansprüche,
**dadurch gekennzeichnet, dass**
- das Aufsiegeln der Siegel-Folie (2) bei sich in Transportrichtung weiterbewegendem Behälter (1) erfolgt und sich dabei insbesondere das Siegelwerkzeug (7) mit dem Behälter (1) mitbewegt und/oder
- ein Beschneiden der Siegelfolie (2) nach dem Aufsiegeln der Siegelfolie (2) erfolgt unter Belassen einer nach außen vorstehenden Zuglasche (13) an der Siegelfolie (2).

4. Verfahren nach einem der vorhergehenden Ansprüche,
**dadurch gekennzeichnet, dass**
- ein Beaufschlagen mit Unterdruck durch den Behälter (1) oder durch die Siegelfolie (2) hindurch durch Einstechen einer Saugkanüle (9) und anschließendes Verschließen einer Einstechöffnung (10) erfolgt und insbesondere
- die Unterdruck-Einstechöffnung (10) in der Siegelfolie (2) mittels Aufkleben eines Etiketts verschlossen wird oder durch Besiegeln des Randes der Einstechöffnung (10) auf dem Behälter (1), insbesondere auf dem Rand (6) des Behälters (1).

5. Verfahren nach einem der vorhergehenden Ansprüche,
**dadurch gekennzeichnet, dass**
- das Beaufschlagen mit Unterdruck durch die Fuge (11) zwischen Siegelfolie (2) und Siegelwerkzeug (7) hindurch erfolgt, insbesondere durch Einlegen einer Saugkanüle (9) dazwischen und eine entsprechende Ausbuchtung im Siegelwerkzeug (7), insbesondere eine bewegliche Ausbuchtung oder
- der Raum um Siegelwerkzeug (7) und Behälter (1) herum insgesamt mit Unterdruck beaufschlagt ist, insbesondere in einer Unterdruckhaube (24) aufgenommen ist.

6. Verfahren nach einem der vorhergehenden Ansprüche 1 bis 5,
**dadurch gekennzeichnet, dass**
- das Beaufschlagen mittels Unterdruck von einem Punkt oberhalb des Trennsteges (4a, b) aus bei mehreren, sich kreuzenden Trennstegen (4a, b) von oberhalb des Kreuzungspunktes (12) der Trennstege (4a, b) erfolgt und/oder
- das Beaufschlagen mit Unterdruck in jedem Abteil (5a, b) des Behälters (1) separat und insbesondere gleichzeitig erfolgt und/oder
- das Beaufschlagen mit Unterdruck durch die anfängliche Fuge (11) zwischen Siegelfolie (2) und Behälter (1) hindurch erfolgt.

7. Verfahren nach einem der vorhergehenden Ansprüche,
**dadurch gekennzeichnet, dass**
- eine Haltekraft einer Siegelnaht so dimensioniert wird, dass sich die Versiegelung zwischen Siegelfolie (2) und Behälter (1) bei einem Überdruck im Behälter (1) löst, bevor die Siegelfolie (2) reißt und/oder
- das Anlegen der Siegelfolie (2) nach unten auf die Trennstege (4a, b) und gegebenenfalls die Produkte (8a, b) erst nach dem Erwärmen der Siegelfolie (2), insbesondere durch das Siegelwerkzeug, (7) erfolgt.

8. Verfahren nach einem der vorhergehenden Ansprüche,
**dadurch gekennzeichnet, dass**
- das Aufsiegeln bei laufendem Behälter (1) und stillstehender Ultraschall-Sonotrode (7) und dazwischen mit dem Behälter (1) mitlaufender Schutzfolie (26), die insbesondere aus Silikon besteht, erfolgt und/oder
- das Siegelwerkzeug (7) einen Unterdruckanschluss (19) sowie eine Saugkanüle (9) oder einen Überdruckanschluss (19') umfasst und/oder
- die Saugkanüle (9) im Bereich der als formschlüssige Positionierelemente verwendeten Aussparungen angeordnet ist.

9. In einem tellerförmigen Behälter (1) abgepacktes Fertiggericht, welches insbesondere gemäß einem der vorhergehenden Ansprüche hergestellt ist, mit
- einem tellerförmigen Behälter (1) mit einem durchgehend umlaufenden Rand (6),
- einer die offene Oberseite des Behälters (1) dicht verschließenden, auf dem Rand des Behälters (1) aufgesiegelten Siegelfolie (2),
- vom Boden des Behälters (1) aufragenden Trennstegen (4a, b), die den Innenraum des Behälters (1) in einzelne Abteile (5a, b) unterteilen, wobei die Trennstege (4a, b) niedriger sind als der äußere Rand (6),
**dadurch gekennzeichnet, dass**
die Siegelfolie (2) ohne Verkleben auf der Oberseite (14a, b) der Trennstege (4a, b) sowie insbesondere der Oberseite der in den Abteilen (5a, b) des Behälters (1) liegenden Produkte (8a, b) anliegt.

10. Fertiggericht nach Anspruch 9,
**dadurch gekennzeichnet, dass**
- ein Zwischenraum zwischen Behälter (1) und Siegelfolie (2) mit Unterdruck beaufschlagt ist oder mit einem Inertgas, insbesondere Stickstoff oder Kohlendioxid, gefüllt ist und/oder
die Siegelfolie (2) und/oder der Behälter (1) in einem Siegelbereich wenigstens eine heiß-siegelfähige Beschichtung aufweisen, insbesondere eine durchgehende heiß-siegelfähige Beschichtung aufweisen, insbesondere die Siegelfolie (2) vollständig aus einem heißsiegelfähigen Material besteht.

11. Fertiggericht nach einem der vorhergehenden Ansprüche 9 oder 10,
**dadurch gekennzeichnet, dass**
- die Trennstege (4a, b) an deren Übergängen in eine Wand des Behälters (1) sowie an ihren Kreuzungspunkten (12) eine stark verbreiterte, insbesondere ebene Oberseite (14a, b) aufweisen und/oder
- die Trennstege (4a, b) an deren Übergängen in die Wand des Behälters (1) schräg auf das Niveau des Randes (6) ansteigen.

12. Fertiggericht nach einem der vorhergehenden Ansprüche 9 bis 11,
**dadurch gekennzeichnet, dass**
- die Siegelfolie (2) in dem einen Abteil (5a) nur auf Höhe des angrenzenden Trennsteges (4a) liegt und in dem anderen Abteil (5b) dicht an der Oberseite der Produkte (8a) und gegebenenfalls der umgebenden, zugänglichen Bereiche des Bodens des Abteiles (5b) anliegt und/oder
- das Volumen des Innenraumes des Behälters (1) bis zur Höhe des umgebenden Randes (6) um mindestens 70%, besser mindestens 100%, besser mindestens 130% größer ist als das Volumen der im Behälter (1) untergebrachten Produkte (8a, b).

13. Fertiggericht nach einem der vorhergehenden Ansprüche 9 bis 12,
**dadurch gekennzeichnet, dass**
- die Trennstege (4a, b) unterschiedlich hoch sind und/oder
- die Trennstege (4a, b) eine Querschnittsform mit hohlem Inneren, insbesondere in Form eines auf dem Kopf stehenden V, besitzen und/oder
- die Trennstege (4a, b) eine ebene Oberseite (14a, b) aufweisen, in der insbesondere eine mit Unterdruck beaufschlagte Mittelrinne (22) angeordnet ist.

14. Fertiggericht fahren nach einem der vorhergehenden Ansprüche 9 bis 13,
**dadurch gekennzeichnet, dass**
- die Wandstärke (15) des Behälters (1) über den gesamten Behälter (1) konstant ist und/oder
- der Rand (6) des Behälters (1) eine doppelt gekröpfte, Z-förmige Aussenkante (16) aufweist.

15. Fertiggericht nach einem der vorhergehenden Ansprüche 9 bis 14,
**dadurch gekennzeichnet, dass**
- formschlüssige Positionierelemente, insbesondere Positioniervertiefungen (23a) , am Rand (6) des Behälters (1), insbesondere an der Innenkante des Randes (6) des Behälters (1), ausgebildet sind und insbesondere
- die Positionierelemente in jedem Eckbereich des Behälters (1) vorhanden sind und an einem Ende des Behälters (1) zwei Positionierelemente mit Anschlagflächen in Längsrichtung (20) und am anderen Ende mit Anschlagflächen in Querrichtung (21) vorhanden sind.

16. Fertiggericht nach einem der vorhergehenden Ansprüche 9 bis 15,
**dadurch gekennzeichnet, dass**
- der Boden des Behälters (1), insbesondere der Boden der einzelnen Abteile (5a, b), einen erhöhten Mittelteil (17) und einen demgegenüber vertieften, insbesondere umlaufenden Randbereich (18a) aufweist und/oder
- die Siegelfolie (2) an einer Stelle über den Rand (6) des Behälters (1) in Form einer Zuglasche (13) vorsteht und die Zuglasche (13) in einem Bereich des Abteiles (5a, b) des Behälters (1) angeordnet ist, welches das Produkt (8a) mit dem geringsten Wasseranteil enthält.

## Claims

1. A method for producing packaged instant meals in a plate shaped container (1) that is closed by a sealing foil that is sealed on an outer edge (6) of the container (1),
a) wherein an inner cavity (3) of the container (1) is divided into individual compartments (5a, b) by divider bars (4a, b) protruding upward from a base and wherein the divider bars (4a, b) are lower than an outer edge (6) of the container (1),
b) wherein the sealing foil (2) is tightly applied to the divider bars (4a, b) in particular also to the top side of the products (8a, b) after placing the sealing foil (2) onto the container (1),
c) wherein the sealing foil (2) is only sealed thereafter exclusively on the edge (6) of the container (1), and
d) wherein the sealing foil (2) is always sealed exclusively on the outer edge (6) always with the same sealing tool (7) with a flat base (7a) independently from the presence, number and position of the divider bars (4a, b) and the outer contour and size of the container (1).

2. The method according to claim 1,
- wherein the sealing foil (2) is optionally applied to the top side (14a, b) of the divider bars (4a, b) and the top side of the products (8a, b) by loading the bottom side (2a) of the sealing foil (2) with vacuum, or
- wherein the sealing foil (2) is applied to the top side of the products (8a) and the divider bars (4a, b) by loading the top side of the sealing foil (2), in particular a space between the top side of the sealing foil (2) and the flat bottom side (7a) of the sealing tool (7) with vacuum.

3. The method according to one of the preceding claims,
- wherein the sealing foil (2) is sealed on when the container (1) moves on in transport direction and in particular while the sealing tool (7) moves together with the container (1), and/or
- wherein the sealing foil (2) is cut after sealing the sealing foil on and an outward protruding pull ear (13) is left at the sealing foil.

4. The method according to one of the preceding claims,
- wherein vacuum is applied through the container (1) or through the sealing foil (2) by inserting a hollow vacuum needle (9) and subsequently closing an insertion opening (10) and in particular
- wherein the vacuum insertion opening (10) in the sealing foil (2) is closed by gluing down a label or by sealing the edge of the insertion opening (10) on the container (1), in particular on the edge (6) of the container (1).

5. The method according to one of the preceding claims,
- wherein vacuum is applied through the gap (11) between the sealing foil (2) and the sealing tool (7), in particular by inserting a suction canula (9) there between and a respective bulge in the sealing tool (7), in particular a movable bulge, or
- wherein the space about the sealing tool (7) and the container (1) is overall loaded with vacuum, in particular received in a vacuum hood (24).

6. The method according to one of the preceding claims 1 through 5,
- wherein vacuum is applied from a point above the separation bar (4a, b) and is applied from above an intersection point (12) of the separation bars (4a, b) when plural separation bars intersect and/or
- vacuum is applied in each section (5a, b) of the container (1) separately and in particular simultaneously and/or
- vacuum is applied through the initial gap (11) between the sealing foil (2) and the container (1).

7. The method according to one of the preceding claims,
- wherein a support force for a sealing seam is sized so that the seal disengages between the seal foil (2) and the container (1) for a positive pressure in the container (1) before the seal foil (2) ruptures and/or
- wherein applying the seal foil (2) in downward direction to the divider bars (4a, b) and optionally the products (8a, b) is only performed after heating the sealing foil (2), in particular through the sealing tool (7).

8. The method according to one of the preceding claims,
- wherein the sealing is performed with the container (1) moving and the ultrasound sonotrode (7) standing still and the protective foil (26) running there between, which protective foil is made in particular from silicon, and/or
- wherein the sealing tool (7) has a vacuum connection (19) and a hollow vacuum needle (9) or a positive pressure connection (19') and/or
- wherein the hollow suction needle (9) is arranged in the portion of the recesses that are used as form locking positioning elements.

9. An instant meal which is packaged in a plate shaped container (1) and which is produced in particular according to one of the preceding claims, comprising
- a plate shaped container (1) with a continuous circumferential edge (6);
- a sealing foil (2) that is sealed on the edge of the container (1) and seals an open top side of the container (1) tight; and
- divider bars (4a, b) extending upward from the base of the container (1) which divide an inner cavity of the container (1) into particular compartments (5a, b), wherein the divider bars (4a, b) are lower than the outer edge (6),
wherein the sealing foil (2) contacts the top side (14a, b) of the divider bars (4a, b) and in particular the top side of the products (8a, b) included in the compartments (5a, b) of the container (1).

10. The instant meal according to claim 9,
- wherein an intermediary space between the container (1) and the sealing foil (2) is loaded with vacuum or filled with an inert gas, in particular nitrogen or carbon dioxide, and/or
- wherein the sealing foil (2) and/or the container (1) has at least one hot sealable coating in a seal portion, in particular a continuous hot sealable coating, wherein the sealing foil (2) is in particular completely made from a hot sealable material.

11. The instant meal according to one of the preceding claims 9 or 10,
- wherein the divider bars (4a, b) include a strongly broadened, in particular a flat surface (14a, b) at their transitions into a wall of the container (1) and at their intersection points (12), and/or
- wherein the divider bars (4a, b) climb at a slant angle to the level of the edge (6) at their transitions into the wall of the container (1).

12. The instant metal according to one of the preceding claims 9 through 11,
- wherein the sealing foil (2) in one compartment (5a) is only at the level of the adjacent divider bar (4a) and tightly contacts the top side of the products (8a) and optionally of the surrounding accessible portions of the base of the compartment (5b) in another compartment (5b) and/or
- wherein the volume of the inner cavity of the container (1) up to the level of the enveloping edge (6) is greater than the volume of the products (8a, b) included in the container (1) by at least 70 %, better by at least 100 %, better by at least 130 %.

13. The instant meal according to one of the preceding claims 9 through 12,
- wherein the divider bars (4a, b) have different heights and/or
- wherein the divider bars (4a, b) have cross-sectional shapes with hollow interiors in particular shapes as an inverted V and/or
- wherein the divider bars (4a, b) have a flat top side (14a, b) in which in particular a center groove (22) is arranged that is loaded with vacuum.

14. The instant meal according to one of the preceding claims 9 through 13,
- wherein the wall thickness (15) of the container (1) is constant over the entire container (1), and/or
- wherein the edge (6) of the container (1) has an outer edge (16) with two elbows that is Z-shaped.

15. The instant meal according to one of the preceding claims 9 through 14,
- wherein form locking positioning elements, in particular positioning indentations (23a) are configured at the edge (6) of the container (1), in particular at an inner edge of the edge (6) of the container (1), and in particular
- wherein the positioning elements are provided in each corner portion of the container (1) and two positioning elements with contact surfaces in longitudinal direction (20) are provided at one end of the container (1) and are provided with contact surfaces in transversal direction (21) at the other end of the container (1).

16. The instant meal according to one of the preceding claims 9 through 15,
- wherein the base of the container (1), in particular the base of the individual compartments (5a, b) has a raised center portion (17) and a particularly circumferential edge portion (18a) that is arranged lower than the center portion, and/or
- wherein the sealing foil (2) protrudes as a pull ear (13) at one location beyond the edge (6) of the container (1) and the pull ear (13) is arranged in a portion of the compartment (5a, b) of the container (1) which portion includes the product (8a) with the lowest water content.

## Revendications

1. Procédé pour la fabrication de plats cuisinés emballés dans un récipient en forme d'assiette (1) qui est fermé par un film (2) scellé sur le bord externe (6) du récipient (1) **caractérisé en ce que**
a) un espace intérieur (3) du récipient (1) est divisé en compartiments séparés (5a, b) par des cloisons de séparation (4a, b) faisant saillie du fond et les cloisons de séparation (4a, b) étant plus basses que le bord supérieur (6) du récipient (1),
b) après l'application du film scellable (2) sur le récipient (1), le film scellable (2) est appliqué de manière hermétique contre les cloisons de séparation (4a, b) en particulier également sur la face supérieure des produits (8a, b),
c) puis, le film scellable (2) est scellé exclusivement sur le bord (6) du récipient (1),
d) le scellement du film scellable (2) ne s'effectue avec un outil de scellement toujours identique (7) avec une face inférieure plane (7a) que sur le bord externe (6) indépendamment de la présence, du nombre et de la position des cloisons de séparation (4a, b) ainsi que du contour externe et de la taille du récipient (1).

2. Procédé selon la revendication 1,
**caractérisé en ce que**
- l'application du film scellable (2) s'effectue éventuellement sur la face supérieure (14a, b) des cloisons de séparation (4a, b) et sur la face supérieure des produits (8a, b) par impact d'une dépression sur la face inférieure (2a) du film scellable (2) ou
- l'application du film scellable (2) s'effectue sur la face supérieure des produits (4a, b) par impact d'une surpression sur la face supérieure de film scellable (2), en particulier d'un espace entre la face supérieure du film scellable (2) et la face inférieure plane (7a) de l'outil de scellement (7).

3. Procédé selon l'une des revendications précédentes,
**caractérisé en ce que**
- l'application du film scellable (2) s'effectue dans la direction de transport du récipient (1) se déplaçant et l'outil de scellement (7) en particulier se déplace avec le récipient (1) et/ou
- une découpe du film scellable (2) s'effectue après le scellement du film scellable (2) en laissant une languette de traction (13) faisant saillie vers l'extérieur sur le film scellable (2).

4. Procédé selon l'une des revendications précédentes,
**caractérisé en ce qu'**
- une application d'une dépression à travers le récipient (1) ou à travers le film scellable (2) s'effectue en insérant une canule d'aspiration (9) et ensuite une ouverture d'insertion (10) est refermée et en particulier
- l'ouverture d'insertion de dépression (10) dans le film scellable (2) est fermée par collage d'une étiquette ou par scellement du bord de l'ouverture d'insertion (10) sur le récipient (1), en particulier sur le bord (6) du récipient (1).

5. Procédé selon l'une des revendications précédentes,
**caractérisé en ce que**
- l'application d'une dépression s'effectue à travers le joint (11) entre le film scellable (2) et l'outil de scellement (7), en particulier en intercalant une canule d'aspiration (9) et par un bombement correspondant dans l'outil de scellement (7), en particulier un bombement mobile ou
- l'espace autour de l'outil de scellement (7) et le récipient (1) subit dans l'ensemble l'impact d'une dépression en particulier est logé dans une cloche de dépression (24).

6. Procédé selon l'une des revendications précédentes,
**caractérisé en ce que**
- l'application par dépression s'effectue d'un point au-dessus de la cloison de séparation (4a, b) en présence de plusieurs cloisons de séparation (4a b) se croisant au-dessus du point d'intersection (12) des cloisons de séparation (4a b) et/ou
- l'application d'une dépression dans chaque compartiment (5a, b) du récipient (1) s'effectue séparément et en particulier simultanément et/ou
- l'application de la dépression s'effectue à travers le joint initial (11) entre le film scellable (2) et le récipient (1).

7. Procédé selon l'une des revendications précédentes,
**caractérisé en ce qu'**
- une force de retenue d'une soudure de scellement est dimensionnée de sorte que le scellement entre le film scellable (2) et le récipient (1) se dissout en présence d'une surpression dans le récipient (1) avant que le film scellable (2) ne se déchire et/ou
- l'application du film scellable (2) s'effectue vers le bas sur les cloisons de séparation (4a b) et éventuellement sur les produits (8a, b) seulement après le réchauffement du film scellable (2), en particulier par l'outil de scellement (7).

8. Procédé selon l'une des revendications précédentes,
**caractérisé en ce que**
- le scellement s'effectue sur le passage du récipient (1) et une sonotrode à ultrasons immobile (7) et avec un film de protection (26) défilant avec le récipient (1), film qui se compose en particulier de silicone et/ou
- l'outil de scellement (7) comprend un raccordement de dépression (19) ainsi qu'une canule d'aspiration (9) ou un raccordement de dépression (19'), et/ou
- la canule d'aspiration (9) est disposée dans la zone des évidements utilisés comme éléments de positionnement par adhérence de forme.

9. Plat cuisiné emballé dans un récipient (1) en forme d'assiette qui est fabriqué en particulier conformément à l'une des revendications précédentes, comprenant :
- un récipient en forme d'assiette (1) avec un bord périphérique (6),
- un film scellable (2) scellé sur le bord du récipient (1) fermant de manière hermétique la face supérieure ouverte du récipient (1),
- des cloisons de séparation (4a, b) faisant saillie du fond du récipient (1), lesquelles divisent l'espace intérieur du récipient (1) en compartiments individuels (5a, b), les cloisons de séparation (4a, b) étant plus basses que le bord extérieur (6),
**caractérisé en ce que**
le film scellable (2) s'applique sans collage sur la face supérieure (14a, b) des cloisons de séparation (4a, b) ainsi qu'en particulier sur la face supérieure des produits (8a, b) se trouvant dans les compartiments (5, b) du récipient (1).

10. Plat cuisiné selon la revendication 9,
**caractérisé en ce qu'**
- un espace intermédiaire entre le récipient (1) et le film scellable (2) subit une dépression ou est rempli d'un gaz inerte, en particulier d'azote ou de dioxyde de carbone, et/ou le film scellable (2) et/ou le récipient (1) présente dans une zone scellée au moins un revêtement thermoscellable, en particulier un revêtement entièrement thermoscellable, en particulier le film scellable (2) se compose intégralement d'un matériau thermoscellable.

11. Plat cuisiné selon l'une des revendications précédentes 9 ou 10,
**caractérisé en ce que**
- les cloisons de séparation (4a, b) présentent sur leurs passages dans une paroi du récipient (1) ainsi que sur leurs points d'intersection (12) une surface fortement élargie, en particulier plane (14a, b) et/ou,
- les cloisons de séparation (4a, b) s'inclinent vers le haut au niveau du bord (6) sur leurs passages dans la paroi du récipient (1).

12. Plat cuisiné selon l'une des revendications précédentes 9 à 11,
**caractérisé en ce que**
- le film scellable (2) ne se trouve dans un compartiment (5a) qu'à la hauteur de la cloison de séparation (4a) attenante et dans l'autre compartiment (5b), s'applique de manière hermétique sur la face supérieure des produits (8a) et éventuellement des zones environnantes, accessibles du fond du compartiment(5b) et/ou
- le volume de l'espace intérieur du récipient (1) est jusqu'à hauteur du bord périphérique (6) d'au moins 70 %, au mieux au moins 100 %, au mieux au moins 130 % plus grand que le volume des produits (8a, b) se trouvant dans le récipient (1).

13. Plat cuisiné selon l'une des revendications précédentes 9 à 12,
**caractérisé en ce que**
- les cloisons de séparation (4a, b) présentent des hauteurs différentes et/ou
- les cloisons de séparation (4a, b) possèdent une section transversale avec un intérieur creux, en particulier en forme d'un V inversé et/ou
- les cloisons de séparation (4a, b) présentent une surface plane supérieure (14a, b) dans laquelle est disposée en particulier une nervure médiane (22) subissant une dépression.

14. Plat cuisiné selon l'une des revendications précédentes 9 à 13,
**caractérisé en ce que**
- l'épaisseur de paroi (15) du récipient (1) est constante sur l'ensemble du récipient (1) et/ou
- le bord (6) du récipient (1) présente une arête externe (16) en forme de Z, à double coude.

15. Plat cuisiné selon l'une des revendications précédentes 9 à 14,
**caractérisé en ce qu'**
- il est ménagé sur le bord (6) du récipient (1), en particulier sur l'arrête interne du bord (6) du récipient (1) des éléments de positionnement par adhérence des formes, en particulier des cavités de positionnement (23a) et en particulier
- les éléments de positionnement sont présents dans chaque zone d'angle du récipient (1) et à une extrémité du récipient (1) deux éléments de positionnement avec des surfaces de butée sont prévus dans la direction longitudinale (20) et à l'autre extrémité avec des surfaces de butée dans la direction transversale (21).

16. Plat cuisiné selon l'une des revendications précédentes 9 à 15,
**caractérisé en ce que**
- le fond du récipient (1), en particulier le fond de chacun des compartiments (5a, b) présente une partie médiane surélevée (17) et une zone de bord (18a) plus profonde, en particulier périphérique, et/ou
- le film scellable (2) fait saillie à un endroit par-dessus le bord (6) du récipient (1) sous forme d'une languette de traction (13) et la languette de traction (13) est disposée dans une zone du compartiment (5a, b) qui contient le produit (8a) avec la teneur en eau la plus faible.
